(19) Europäisches Patentamt / European Patent Office / Office européen des brevets

(11) **EP 4 229 701 B1**

(12) **EUROPÄISCHE PATENTSCHRIFT**

(45) Veröffentlichungstag und Bekanntmachung des Hinweises auf die Patenterteilung:
**04.12.2024   Patentblatt 2024/49**

(21) Anmeldenummer: **21791308.6**

(22) Anmeldetag: **11.10.2021**

(51) Internationale Patentklassifikation (IPC):
**H01M 10/0525** (2010.01)    **H01M 50/429** (2021.01)
**H01M 50/44** (2021.01)    **H01M 50/491** (2021.01)
**H01M 50/494** (2021.01)

(52) Gemeinsame Patentklassifikation (CPC):
**H01M 50/4295; H01M 10/0525; H01M 50/44;
H01M 50/491; H01M 50/494;** Y02E 60/10

(86) Internationale Anmeldenummer:
**PCT/EP2021/078052**

(87) Internationale Veröffentlichungsnummer:
**WO 2022/078959 (21.04.2022 Gazette 2022/16)**

(54) **CELLULOSEFASER-BASIERTER SEPARATOR FÜR ELEKTROCHEMISCHE ELEMENTE**

CELLULOSE FIBER-BASED SEPARATOR FOR ELECTROCHEMICAL ELEMENTS

SÉPARATEUR À BASE DE FIBRE DE CELLULOSE POUR ÉLÉMENTS ÉLECTROCHIMIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.10.2020   DE 102020126899**

(43) Veröffentlichungstag der Anmeldung:
**23.08.2023   Patentblatt 2023/34**

(73) Patentinhaber: **delfortgroup AG
4050 Traun (AT)**

(72) Erfinder:
• **PLAPPERT, Sven
6130 Schwaz (AT)**

• **VOLGGER, Dietmar
6069 Gnadenwald (AT)**
• **MAIR, Christian
6122 Fritzens (AT)**

(74) Vertreter: **Gille Hrabal Partnerschaftsgesellschaft mbB
Patentanwälte
Brucknerstraße 20
40593 Düsseldorf (DE)**

(56) Entgegenhaltungen:
**JP-A- 2014 051 767    JP-A- 2016 171 048
JP-B2- 6 076 278**

**Beschreibung**

GEBIET DER ERFINDUNG

Die Erfindung betrifft einen Separator für elektrochemische Elemente, der durch ein Fasersubstrat gebildet wird, das im Wesentlichen aus fibrillierten Fasern regenerierter Cellulose und Zellstoff mit hohem Feinstoffgehalt besteht. Ein solcher Separator weist besonders günstige Eigenschaften insbesondere hinsichtlich der Porengrößenverteilung auf.

HINTERGRUND UND STAND DER TECHNIK

Ein elektrochemisches Element umfasst typischerweise mindestens eine positive Elektrode, eine negative Elektrode, einen Elektrolyten, einen Separator, ein Gehäuse und Stromabnehmer. Der Separator ist mit dem Elektrolyten getränkt und hat die Aufgabe die beiden Elektroden elektrisch zu trennen. Dabei soll er aber auch einen möglichst ungehinderten Fluss von Ionen zwischen den Elektroden erlauben, damit das elektrochemische Element günstige Eigenschaften hat, insbesondere rasches Laden und die Möglichkeit der Entnahme hoher Stromstärken.

Diese Anforderungen an den Separator bedeuten, dass er möglichst dünn sein soll, damit der Weg der Ionen von einer Elektrode zur anderen durch die Poren des Separators kurz ist und eine hohe volumetrische Energiedichte des elektrochemischen Elements erreicht wird, und dass er eine hohe Porosität besitzen soll. Insbesondere wenn es sich bei dem elektrochemischen Element um einen Akkumulator handelt, soll die Porosität nicht durch wenige große Poren sondern durch eine Vielzahl kleiner Poren gebildet werden, weil kleine Poren das Wachstum von Kristallen, insbesondere von Dendriten, an den Elektroden hemmen. Diese Kristalle können den Akkumulator kurzschließen und damit seine Lebensdauer und Leistung reduzieren. Erwünscht ist eine sehr große Anzahl kleiner aber möglichst gleich großer Poren, also eine Porengrößenverteilung mit kleiner Standardabweichung.

Zudem soll der Separator auch chemisch beständig gegenüber dem Elektrolyten sein, da elektrochemische Elemente mehrfach wieder aufgeladen werden können und üblicherweise mehrere Jahre im Einsatz sind. Der Separator muss daher auch in oxidativen und reduktiven Umgebungen beständig sein.

Aus Sicherheitsgründen soll der Separator auch eine gute thermische Stabilität besitzen, um bei Beschädigung des elektrochemischen Elements die Brandgefahr zu begrenzen.

Schließlich braucht der Separator trotz seiner geringen Dicke eine ausreichende mechanische Festigkeit, damit daraus problemlos elektrochemische Elemente hergestellt werden können und er soll bei der Herstellung den Elektrolyten möglichst rasch und in sein ganzes Porenvolumen aufnehmen, um eine hohe Ionenleitfähigkeit zu erreichen.

Diese Vielzahl an Anforderungen lässt sich gemäß dem Stand der Technik vor allem mit dünnen Kunststofffolien erfüllen, die in sehr gleichmäßiger Qualität hergestellt werden können. Die verwendeten Kunststoffe, typischerweise Polyolefine, sind allerdings zumeist thermoplastisch und oft nicht ausreichend thermisch beständig, sodass Probleme bei der Brandsicherheit der daraus gefertigten elektrochemischen Elemente bestehen, vor allem, weil bei hohen Temperaturen die Kunststoffe schrumpfen und einen großflächigen Kontakt zwischen den Elektroden nicht mehr verhindern.

Versuche Fasersubstrate als Separatoren für elektrochemische Elemente, insbesondere für Lithium-Ionen-Batterien, zu verwenden waren bisher wenig erfolgreich, weil Fasersubstrate ausreichender Festigkeit oft zu dick sind und, bedingt durch die Rohmaterialien und den Herstellungsprozess, die Poren zu groß sind und die Standardabweichung der Porengrößenverteilung zu hoch ist. Vor allem Separatoren aus Cellulosefasern haben sich in dieser Hinsicht als besonders schwierig erwiesen, weil sie auf natürlichen Rohstoffen wie Zellstofffasern basieren, die selbst erheblich in Länge, Dicke und Form variieren, obwohl Cellulosefasern hinsichtlich der Sicherheitsaspekte, insbesondere der Dimensionsstabilität bei hohen Temperaturen, und hinsichtlich der ökologischen Aspekte Vorteile bieten würden.

Trotz dieser ungünstigen Ausgangslage besteht ein Interesse in der Industrie, Separatoren für elektrochemische Elemente zur Verfügung zu haben, die im Wesentlichen aus Cellulosefasern gebildet werden und für die Verwendung in elektrochemischen Elementen günstige Eigenschaften aufweisen.

ZUSAMMENFASSUNG DER ERFINDUNG

Der Erfindung liegt daher die Aufgabe zugrunde, einen Separator für elektrochemische Elemente zur Verfügung zu stellen, der im Wesentlichen aus Cellulosefasern gebildet ist, und die Anforderungen an Dicke, Porengrößenverteilung, Festigkeit und chemische Beständigkeit erfüllt, sodass die Vorteile hinsichtlich der Sicherheit und der Ökologie auch wirtschaftlich sinnvoll genutzt werden können.

Diese Aufgabe wird durch einen Separator für elektrochemische Elemente nach Anspruch 1 und ein Verfahren zur Herstellung eines Separators für elektrochemische Elemente nach Anspruch 12 gelöst. Vorteilhafte Weiterbildungen sind in den abhängigen Ansprüchen angegeben.

Die Erfinder haben gefunden, dass sich diese Aufgabe durch einen Separator für elektrochemische Elemente lösen lässt, wobei mindestens 70% und höchstens 95% der Masse des Separators durch fibrillierte Fasern regenerierter Cellulose und mindestens 3% und höchstens 30% der Masse des Separators durch Zellstoff mit hohem Feinstoffgehalt gebildet werden, wobei von den fibrillierten Fasern der regenerierten Cellulose, die eine Länge von mindestens 1 mm haben, mindestens 10 %, bezogen auf die Anzahl, eine verzweigte Struktur aufweisen und wobei im Zellstoff mit hohem Feinstoffgehalt der Anteil an Fasern mit einer Länge von weniger als 0,2 mm mindestens 70% bezogen auf die aufsummierte Länge der Fasern im Zellstoff mit hohem Feinstoffgehalt beträgt.

Eine wesentliche Schwierigkeit bei der Herstellung von Fasersubstraten, die Feinstoffe enthalten, besteht darin, die Feinstoffe im Fasersubstrat zu halten, sodass sie bei der Herstellung des Fasersubstrats und in weiteren Verarbeitungsschritten nicht verloren gehen. Diese Schwierigkeit konnten die Erfinder durch ein spezielles Mahlverfahren überwinden, das die Fasern der regenerierten Cellulose mit einer besonderen Morphologie ausstattet. Dabei werden die Fasern aus regenerierter Cellulose vor allem fibrilliert und weniger geschnitten und es entstehen bei zumindest einem Teil der Fasern verzweigte Strukturen, die nach den Erkenntnissen der Erfinder wesentlich dazu beitragen, die Feinstoffe im Fasersubstrat zu halten. Die verzweigten Strukturen sind vor allem dadurch gekennzeichnet, dass die Fibrillen nicht vollständig voneinander getrennt sind, sondern an einem Ende weiterhin zu einer dickeren Faser verbunden bleiben. Die verzweigten Strukturen verbinden sich untereinander durch Wasserstoffbrückenbindungen und bilden ein Netzwerk, das zu einer hohen Festigkeit beiträgt und die Grundlage schafft, um weitere Fasern mit verzweigter Struktur festzuhalten. Auf diese Weise entsteht ein hinreichend dichtes Netz, das die Feinstoffe aufnehmen kann. Die Feinstoffe dienen dabei vor allem dazu, die Porengröße zu reduzieren und eine Porengrößenverteilung mit einer kleinen Standardabweichung zu erzeugen.

Eine Fibrillierung der regenerierten Cellulose zur Erzeugung der verzweigten Strukturen lässt sich besonders günstig in einer Kolloidmühle erreichen.

Die Fasern der regenerierten Cellulose werden dabei so gemahlen, dass ein Teil der Fasern eine verzweigte Struktur aufweist. Erfindungsgemäß weisen mindestens 10% aller Fasern der fibrillierten regenerierten Cellulose mit einer Länge von mindestens 1 mm eine solche verzweigte Struktur auf. Bevorzugt ist der Anteil an Fasern mit einer verzweigten Struktur höher und beträgt mindestens 15% und besonders bevorzugt mindestens 20% jeweils bezogen auf die Anzahl der Fasern der fibrillierten regenerierten Cellulose mit einer Länge von mindestens 1 mm.

Der erfindungsgemäße Separator wird zu mindestens 70% und höchstens 95%, bevorzugt zu mindestens 75% und höchstens 90% bezogen auf die Masse des Separators aus fibrillierten Fasern regenerierter Cellulose gebildet. Diese Art und die Menge der Fasern im Separator erlauben es eine gute Festigkeit zu erreichen, sodass der Separator auch zu einem elektrochemischen Element verarbeitet werden kann.

Die Fasern regenerierter Cellulose sind bevorzugt in einem Lösungsmittel gesponnene Fasern ("*solvent-spun*"), besonders bevorzugt Lyocell® Fasern.

Die lineare Dichte der Fasern aus regenerierter Cellulose vor dem Fibrillieren ist für das Mahlen der Fasern von Bedeutung. Bevorzugt beträgt die mittlere lineare Dichte der Fasern regenerierter Cellulose mindestens 0,8 g/10000 m (0,8 dtex) und höchstens 3,0 g/10000 m (3,0 dtex) und besonders bevorzugt mindestens 1,0 g/10000 m (1,0 dtex) und höchstens 2,5 g/10000 m (2,5 dtex).

Die Länge der Fasern aus regenerierter Cellulose vor dem Fibrillieren ist vor allem für die Festigkeit des Separators wichtig, wobei längere Fasern zu einer höheren Festigkeit führen aber auch mehr Energieaufwand bei der Mahlung bedeuten. Bevorzugt beträgt die mittlere Länge der Fasern aus regenerierter Cellulose vor dem Fibrillieren mindestens 2 mm und höchstens 8 mm und besonders bevorzugt mindestens 3 mm und höchstens 6 mm.

Der erfindungsgemäße Separator wird zu mindestens 3% und höchstens 30%, bevorzugt mindestens 5% und höchstens 20%, bezogen auf die Masse des Separators, aus Zellstoff mit hohem Feinstoffgehalt gebildet. Der Zellstoff mit hohem Feinstoffgehalt erzeugt eine Porengrößenverteilung mit einer kleinen Standardabweichung bei hoher Porosität. Ein höherer Anteil an Zellstoff mit hohem Feinstoffgehalt erschwert das Entwässern der Faserbahn bei der Herstellung des Separators auf einer Papiermaschine. Zudem ist Zellstoff mit hohem Feinstoffgehalt vergleichsweise aufwändig in der Herstellung und teuer. Die angegebenen Intervalle erlauben daher eine besonders günstige Kombination aus Porosität, Festigkeit, Kosten und Entwässerungszeit. Durch das Fibrillieren der Fasern der regenerierten Cellulose werden auch Feinstoffe gebildet, die teilweise sogar in größerer Menge als die Feinstoffe des Zellstoffs mit hohem Feinstoffgehalt im Separator enthalten sein können. Nach den Erkenntnissen der Erfinder weisen die Feinstoffe der regenerierten Cellulose aber eine gröbere Struktur auf und eignen sich daher nicht so gut, eine hohe Porosität bei kleiner mittlerer Porengröße und geringer Standardabweichung der Porengrößenverteilung zu erreichen. Die Feinstoffe des Zellstoffs mit hohem Feinstoffgehalt haben hingegen eine feinere Struktur und erlauben es daher auch bei geringem Gesamtanteil im Separator, die mittlere Porengröße und die Standardabweichung der Porengrößenverteilung wesentlich effizienter zu reduzieren. Zudem kann durch noch intensiveres Fibrillieren der Fasern regenerierter Cellulose der Anteil an Feinstoffen kaum erhöht werden ohne die Fasern mit verzweigter Struktur zu zerstören, sodass im Rahmen der Erfindung der Anteil an Feinstoffen durch Zufuhr der Feinstoffe aus dem Zellstoff mit hohem Feinstoffanteil eingestellt wird.

Der Zellstoff mit hohem Feinstoffgehalt wird erfindungsgemäß aus Zellstoff hergestellt, wobei der Zellstoff vorzugsweise aus Nadelhölzern, Laubhölzern oder anderen Pflanzen wie Hanf, Flachs, Jute, Ramie, Kenaf, Kapok, Kokosnuss, Abacá, Sisal, Bambus, Baumwolle oder Espartogras, oder aus Altpapierstoff gewonnen ist. Auch Mischungen aus Zellstoffen verschiedener Herkunft können für die Herstellung des Zellstoffs mit hohem Feinstoffgehalt eingesetzt werden. Besonders bevorzugt sind die Zellstoffe aus Laubhölzern oder Nadelhölzern gewonnen.

Erfindungsgemäß ist der Zellstoff mit hohem Feinstoffgehalt dadurch charakterisiert, dass der Anteil an Zellstofffasern mit einer Länge von weniger als 0,2 mm mindestens 70% bezogen auf die aufsummierte Länge der Zellstofffasern beträgt. Das bedeutet, dass die Summe der Längen der Zellstofffasern mit weniger als 0,2 mm Länge mindestens 70% der Summe der Längen aller Zellstofffasern im Zellstoff mit hohem Feinstoffgehalt beträgt. Die Feinstoffe tragen dazu bei, die Poren weiter zu verkleinern und eine Porengrößenverteilung mit kleiner Standardabweichung bei hoher Porosität zu erzeugen. Bevorzugt ist der Gehalt an Feinstoffen im Zellstoff mit hohem Feinstoffgehalt daher höher, sodass der Anteil der Zellstofffasern mit weniger als 0,2 mm Länge mindestens 80%, besonders bevorzugt mindestens 90% beträgt, jeweils bezogen auf die aufsummierte Länge der Zellstofffasern im Zellstoff mit hohem Feinstoffgehalt. Dieser Gehalt an Feinstoffen kann mittels einer bildanalytischen Methode nach ISO 16065-2:2014 bestimmt werden.

Nanofibrillierter Zellstoff oder mikrofibrillierter Zellstoff kann als Zellstoff mit hohem Feinstoffgehalt gut geeignet sein und ist kommerziell, beispielsweise unter der Bezeichnung Exilva-F-01, bei der Firma Borregaard verfügbar.

In bevorzugten Ausführungsformen lassen sich die Eigenschaften des Separators noch weiter verbessern, indem Länge und Dicke der Feinstoffe im Herstellungsprozess des Zellstoffs mit hohem Feinstoffgehalt noch genauer eingestellt werden, sodass noch kürzere und dünnere Fasern erzeugt werden, die sogenannten sekundären Feinstoffe. Sekundäre Feinstoffe sind Fasern, deren Länge L weniger als 100 $\mu$m beträgt und deren Dicke D in $\mu$m die Ungleichung

$$D \leq 50 - 0{,}3 \cdot L$$

erfüllt, wobei L in $\mu$m einzusetzen ist. Bevorzugt beträgt der Anteil an sekundären Feinstoffen im Zellstoff mit hohem Feinstoffgehalt mindestens 40%, besonders bevorzugt mindestens 60%, jeweils bezogen auf die aufsummierte Länge der Fasern im Zellstoff mit hohem Feinstoffgehalt. Der Anteil an sekundären Feinstoffen kann ebenfalls mittels einer bildanalytischen Methode nach ISO 16065-2:2014 bestimmt werden. Beispielsweise kann das Messgerät L&W Fiber Tester Plus der Firma Lorentzen & Wettre zur Bestimmung der Faserlängen und Faserdicken und deren Verteilung verwendet werden.

Der erfindungsgemäße Separator kann weitere Komponenten enthalten, die der Fachmann nach seiner Erfahrung passend zum Herstellungsprozess wählen kann, dazu gehören beispielsweise Polyvinylalkohol, Polyethylenglykol, Polyvinylidenflourid, Guaran, Stärke, Carboxymethylcellulose, Methylcellulose, Dialdehyde, wie Glyoxal, und anorganische Füllstoffe wie Kaolin, Titandioxid ($TiO_2$), Siliziumdioxid ($SiO_2$), Aluminiumoxid ($Al_2O_3$), Zirkoniumdioxid ($ZrO_2$) oder Calciumcarbonat ($CaCO_3$).

Der erfindungsgemäße Separator kann neben den fibrillierten Fasern aus regenerierter Cellulose und dem Zellstoff mit hohem Feinstoffgehalt auch noch weitere Fasern enthalten. Dazu können beispielsweise Fasern aus Cellulosederivaten, nicht fibrillierte Fasern aus regenerierter Cellulose, Glasfasern, Kunststofffasern, wie beispielsweise Fasern aus Polyolefinen, wie Polyethylen oder Polypropylen; aus Polyestern, wie Polyethylenterephthalat oder Polymilchsäuren; aus Polyethern, Polysulfonen, Polyurethanen, Polyamiden, Polyimiden, Polyvinylalkohol, Polyacrylnitril, Polyphenylensulfid oder aus Ethylen-Vinylacetat-Copolymeren gehören.

Bevorzugt beträgt der Anteil anderer Fasern zusammengenommen allerdings höchstens 10%, besonders bevorzugt höchstens 5% der Masse des Separators.

Der erfindungsgemäße Separator soll dünn sein, damit die im Elektrolyten fließenden Ionen nur einen kurzen Weg durch die Poren des Separators zwischen den beiden Elektroden zurücklegen müssen und das daraus gefertigte elektrochemische Element eine hohe volumetrische Energiedichte aufweist. Andererseits ist eine gewisse Dicke erforderlich, um die Elektroden sicher elektrisch voneinander zu isolieren und eine gute Festigkeit des Separators zu erreichen. Bevorzugt beträgt die Dicke des erfindungsgemäßen Separators daher mindestens 10 $\mu$m und höchstens 55 $\mu$m, besonders bevorzugt mindestens 12 $\mu$m und höchstens 35 $\mu$m. Die Dicke des Separators kann nach ISO 534:2011 an einem einzelnen Blatt bestimmt werden.

Das Flächengewicht des Separators sorgt für eine gute Festigkeit, allerdings steigen mit dem Flächengewicht auch die Dicke und der Materialaufwand. Bevorzugt beträgt das Flächengewicht des erfindungsgemäßen Separators daher mindestens 8 g/m$^2$ und höchstens 30 g/m$^2$, besonders bevorzugt mindestens 12 g/m$^2$ und höchstens 25 g/m$^2$. Das Flächengewicht kann nach ISO 536:2012 bestimmt werden.

Die Porosität eines Separators ist das Verhältnis aus dem Porenvolumen zum Gesamtvolumen des Separators und wird üblicherweise als Prozentsatz ausgedrückt. Die Porosität des Separators kann aus der Dicke und dem Flächengewicht, jeweils gemessen nach ISO 534:2011, und der Dichte der Fasern abgeschätzt werden, wobei für die Fasern eine Dichte von 1500 kg/m$^3$ gewählt werden kann. Näherungsweise kann unter diesen Annahmen die Porosität $\mu$ als Verhältnis des Porenvolumens zum Gesamtvolumen des Separators durch

$$\mu = 1 - \frac{2}{3}\frac{m}{d}$$

berechnet werden, wobei $m$ das Flächengewicht in g/m$^2$ und $d$ die Dicke in $\mu$m ist und die Porosität als Wert zwischen 0 und 1 erhalten wird und durch Multiplikation mit 100 in einen Prozentsatz umgewandelt werden kann. Die Porosität soll möglichst hoch sein, wird aber vor allem durch die nötige mechanische Festigkeit und die Anforderung, dass die Poren möglichst klein sein sollen, von oben begrenzt. Bevorzugt beträgt die Porosität mindestens 30% und höchstens 85%, besonders bevorzugt mindestens 35% und höchstens 75%.

Die Porengrößenverteilung, die mittlere Fließporengröße und der Standardabweichung der mittleren Fließporengröße kann durch Kapillarströmungsporosimetrie gemäß ASTM F316-03(2019) Standard Test Methods for Pore Size Characteristics of Membrane Filters by Bubble Point and Mean Flow Pore Test bestimmt werden. Dabei wird die Durchflussmenge eines Mediums durch den Separator bei steigender Druckdifferenz bestimmt. Dieses Messverfahren ist für Separatoren besonders gut geeignet, weil nur Poren erfasst werden, die durch den Separator führen, und die engste Stelle jeder Pore den Durchfluss bestimmt. Diese Merkmale der Poren sind auch für die Leitung der Ionen durch den Separator von Bedeutung.

Die Poren im Separator sollen eine gewisse Größe nicht überschreiten, um das Wachstum von Dendriten auf den Elektroden zu begrenzen und sie sollen gleich groß sein, also eine Porengrößenverteilung mit kleiner Standardabweichung aufweisen. Bevorzugt beträgt die mittlere Fließporengröße daher mindestens 40 nm und höchstens 1000 nm, bevorzugt mindestens 50 nm und höchstens 800 nm.

Typischerweise sind die Porengrößen in erfindungsgemäßen Separatoren monomodal verteilt, sodass die Breite der Porengrößenverteilung durch die Standardabweichung der mittleren Fließporengröße gut charakterisiert werden kann. Die Standardabweichung der mittleren Fließporengröße beträgt beim erfindungsgemäßen Separator daher bevorzugt mindestens 3 nm und höchstens 200 nm, besonders bevorzugt mindestens 3 nm und höchstens 100 nm. Alternativ oder ergänzend zur Standardabweichung der mittleren Fließporengröße kann die Porengrößenverteilung auch durch die Fließporengröße $D_{90}$ charakterisiert werden, wobei $D_{90}$ so bestimmt wird, dass 90% des Durchflusses durch Poren erfolgt, deren Fließporengrößen den Wert $D_{90}$ nicht überschreiten. Die Fließporengröße $D_{90}$ beträgt bevorzugt mindestens 100 nm und höchstens 1500 nm, besonders bevorzugt mindestens 200 nm und höchstens 1000 nm.

Die Festigkeit des Separators ist für die Verarbeitung des Separators zu einem elektrochemischen Element von Bedeutung. Die Festigkeit kann durch die Zugfestigkeit charakterisiert und nach ISO 1924-2:2008 bestimmt werden. Durch die Art des Herstellungsverfahrens und die Fasern mit verzweigter Struktur hängt die Zugfestigkeit nicht besonders stark von der Richtung ab, in der die Probe aus dem Separator entnommen wurde. Daher gelten die Anforderungen als erfüllt, wenn sie in mindestens einer Richtung erfüllt sind. Die Zugfestigkeit des erfindungsgemäßen Separators beträgt bevorzugt mindestens 0,3 kN/m und höchstens 2 kN/m, besonders bevorzugt mindestens 0,5 kN/m und höchstens 1,5 kN/m. Die Festigkeit kann durch intensivere Mahlung der Fasern aus regenerierter Cellulose gesteigert werden, allerdings bedeutet das einen höheren Energieaufwand und die Fasern werden dabei stärker gekürzt, sodass die Festigkeit nicht beliebig gesteigert werden soll.

Für die automatisierte Weiterverarbeitung des Separators zu einem elektrochemischen Element ist auch die Dehnung des Separators von Bedeutung. Die Dehnung kann durch die Bruchdehnung beschrieben und nach ISO 1924-2:2008 gemessen werden. Wie die Zugfestigkeit hängt auch die Bruchdehnung von der Richtung ab, in der die Probe aus dem Separator entnommen wurde. Diese Abhängigkeit ist aber nicht sehr ausgeprägt, sodass die Anforderungen erfüllt sind, wenn sie in mindestens einer Richtung erfüllt sind. Die Bruchdehnung des erfindungsgemäßen Separators beträgt bevorzugt mindestens 0,5% und höchstens 4,0%, besonders bevorzugt mindestens 1,0% und höchstens 3,5%.

Die Elastizität des Separators ist ebenfalls von Bedeutung. Sie kann durch den Elastizitätsmodul charakterisiert werden, der sich aus der Messung des Kraft-Dehnungs-Verlaufs gemäß ISO 1924-2:2008 ergibt. Auch der Elastizitätsmodul hängt bei den erfindungsgemäßen Separatoren nur wenig von der Richtung ab, in der die Probe aus dem Separator entnommen wurde, sodass der Elastizitätsmodul unabhängig von der Richtung bevorzugt mindestens 1 GPa und höchstens 8 GPa, besonders bevorzugt mindestens 2 GPa und höchstens 6 GPa beträgt.

Da die Messung der Porengrößenverteilung mittels Kapillarströmungsporosimetrie aufwändig ist, kann vereinfacht die Porenstruktur des Separators auch durch die Luftdurchlässigkeit nach Gurley charakterisiert werden. Die Luftdurchlässigkeit ist auch ein gutes Maß dafür, wie rasch der Separator den Elektrolyten absorbieren kann. Eine hohe Absorptionsgeschwindigkeit ist für die Produktivität bei der Herstellung von elektrochemischen Elementen vorteilhaft. Die Luftdurchlässigkeit nach Gurley kann nach ISO 5636-5:2013 bestimmt werden und beträgt bevorzugt mindestens 10 s und höchstens 450 s, bevorzugt mindestens 40 s und höchstens 300 s.

Der Separator kann in elektrochemischen Elementen eingesetzt werden. Ein erfindungsgemäßes elektrochemisches Element umfasst zwei Elektroden, einen Elektrolyten und den erfindungsgemäßen Separator. Bevorzugt ist das elektrochemische Element ein Kondensator, ein Hybridkondensator, ein Superkondensator oder ein Akkumulator und besonders bevorzugt ist das elektrochemische Element eine Lithium-Ionen-Batterie.

Der erfindungsgemäße Separator kann durch das folgende, erfindungsgemäße Verfahren hergestellt werden, das die folgenden Schritte umfasst,

A - Herstellen einer wässrigen Suspension aus fibrillierbaren Fasern regenerierter Cellulose,

B - Fibrillieren der Fasern aus regenerierter Cellulose aus Schritt A,

C - Einbringen der wässrigen Suspension aus fibrillierten Fasern regenerierter Cellulose aus Schritt B in einen Stoffauflauf,

D - Aufbringen der wässrigen Suspension aus Schritt C auf ein umlaufendes Sieb zur Bildung einer Faserbahn,

E - Entwässern der Faserbahn auf dem umlaufenden Sieb,

F - Trocknen der Faserbahn in einer ersten Trocknungsvorrichtung,

G - Trocknen der Faserbahn in einer zweiten Trocknungsvorrichtung,

H - Aufrollen der den Separator bildenden Faserbahn,

wobei die Fasern regenerierter Cellulose in Schritt C so fibrilliert werden, dass von den Fasern mit einer Länge von mindestens 1 mm mindestens 10% der Fasern, bezogen auf die Anzahl, eine verzweigte Struktur aufweisen, und

wobei Zellstoff mit hohem Feinstoffgehalt in mindestens einem der folgenden Schritte hinzugefügt wird,

(a) in Schritt A durch Hinzufügen zur wässrigen Suspension,

(b) in Schritt C durch Hinzufügen in den Stoffauflauf,

(c) in Schritt D durch Aufbringen aus einem weiteren Stoffauflauf auf die auf dem umlaufenden Sieb gebildete Faserbahn,

(d) zwischen den Schritten E und F durch Auftrag auf die Faserbahn in einer Auftragsvorrichtung, oder

(e) zwischen Schritt G und H durch Auftrag auf die Faserbahn in einer Auftragsvorrichtung, und

wobei im Zellstoff mit hohem Feinstoffgehalt mindestens 70% der Fasern, bezogen auf die aufsummierte Länge der Fasern, eine Länge von weniger als 0,2 mm aufweisen, und

wobei mindestens 70% und höchstens 95% der Masse des Separators nach dem Trocknen in Schritt G durch fibrillierte Fasern regenerierter Cellulose und mindestens 3% und höchstens 30% der Masse des Separators durch Zellstoff mit hohem Feinstoffgehalt gebildet werden.

In einer bevorzugten Ausführungsform des erfindungsgemäßen Verfahrens erfolgt Schritt B so, dass die Fasern regenerierter Cellulose mehr fibrilliert und weniger geschnitten werden, und besonders bevorzugt erfolgt Schritt B in einer Kolloidmühle. Die Erfinder haben gefunden, dass die Bildung der verzweigten Strukturen damit zusammenhängt, dass die Fasern wenig geschnitten werden und ein erheblicher Teil des Fibrillierens durch Faser-Faser-Reibung zustande kommt. Diese Art der Fibrillierung kann in verschiedenen Mahlaggregaten durchgeführt werden, besonders bewährt hat sich aber eine Kolloidmühle.

In einer bevorzugten Ausführungsform wird Schritt B so ausgeführt, dass der Mahlgrad nach Schopper Riegler (°SR), gemessen gemäß ISO 5267-1:1999, mindestens 70 °SR und höchstens 100 °SR, besonders bevorzugt mindestens 80 °SR und höchstens 95 °SR beträgt. Eine intensivere Mahlung, und damit ein höherer Mahlgrad nach Schopper Riegler, führen zu mehr Fibrillen und einer höheren Festigkeit und feineren Porenstruktur. Da der Energieaufwand aber beträchtlich ist und mit zunehmender Intensität der Mahlung die Fasern auch gekürzt werden, stellen die angegebenen Intervalle einen günstigen Kompromiss dar.

Durch die Mahlung der regenerierten Cellulose in Schritt B können Fasern mit einer Länge von weniger als 0,2 mm entstehen, deren Anteil aber nicht sehr hoch sein soll, weil die Fasern der regenerierten Cellulose vor allem ein Netzwerk bilden sollen, das die Fasern des Zellstoffs mit hohem Feinstoffgehalt festhält. Bevorzugt wird Schritt B daher so ausgeführt, dass in den fibrillierten Fasern der regenerierten Cellulose nach Schritt B mindestens 30% und höchstens 70%, besonders bevorzugt mindestens 40% und höchstens 65% der aufsummierten Faserlänge durch Fasern mit einer Länge von weniger als 0,2 mm gebildet werden. Dieser Anteil an Fasern mit einer Länge von weniger als 0,2 mm kann nach ISO 16065-2:2014 bestimmt werden.

In einer bevorzugten Ausführungsform des erfindungsgemäßen Verfahrens werden mindestens die Schritte C bis G auf einer Papiermaschine durchgeführt.

Die Trocknungsvorrichtungen der Schritte F und G können verschieden oder gleich sein und können bevorzugt durch einen oder mehrere beheizte Trockenzylinder gebildet sein.

In einer bevorzugten Ausführungsform des erfindungsgemäßen Verfahrens kann die Faserbahn zwischen den Schritten G und H kalandriert werden. Dabei wird die Faserbahn durch mindestens einen Walzspalt durchgeführt, wobei ein mechanischer Druck auf die Faserbahn ausgeübt wird. Besonders bevorzugt beträgt die Zahl der Walzspalte, durch die die Faserbahn durchgeführt wird, mindestens 2 und höchstens 14, besonders bevorzugt mindestens 5 und höchstens 10. Die Linienlast, die in allen oder zumindest einem Teil der Walzspalten auf die Faserbahn ausgeübt wird, beträgt bevorzugt mindestens 20 kN/m und höchstens 600 kN/m, bevorzugt mindestens 60 kN/m und höchstens 400 kN/m. Das Kalandrieren ist hilfreich, um die Dicke des Separators zu reduzieren und die Struktur zu verdichten, sodass kleinere Poren entstehen. Im Fall, dass Schritt (e) durchgeführt wird, erfolgt das Kalandrieren bevorzugt zwischen den Schritten (e) und H.

In einer bevorzugten Ausführungsform des erfindungsgemäßen Verfahrens erfolgt der Auftrag zumindest eines Teils des Zellstoffs mit hohem Feinstoffgehalt in Schritt (d) durch eine Filmpresse oder ein Streichaggregat.

In einer bevorzugten Ausführungsform des erfindungsgemäßen Verfahrens erfolgt der Auftrag zumindest eines Teils des Zellstoffs mit hohem Feinstoffgehalt in Schritt (e) durch Drucken oder Sprühen. In dieser bevorzugten Ausführungsform kann der Auftrag des Zellstoffs mit hohem Feinstoffgehalt auf eine oder beiden Seiten erfolgen und besonderes bevorzugt erfolgt er auf beide Seiten.

Der Separator aus Schritt H des erfindungsgemäßen Verfahrens wird bevorzugt zu mindestens 75% und höchstens 90% bezogen auf die Masse des Separators aus fibrillierten Fasern regenerierter Cellulose gebildet.

Die fibrillierbaren Fasern regenerierter Cellulose aus Schritt A des erfindungsgemäßen Verfahrens sind bevorzugt in einem Lösungsmittel gesponnene Fasern ("*solvent-spun*"), besonders bevorzugt Lyocell® Fasern.

Die mittlere Länge der fibrillierbaren Fasern aus regenerierter Cellulose in Schritt A des erfindungsgemäßen Verfahrens beträgt mindestens 2 mm und höchstens 8 mm und besonders bevorzugt mindestens 3 mm und höchstens 6 mm. Die mittlere Länge der Fasern kann nach ISO 16065-2:2014 bestimmt werden.

Der Separator aus Schritt H des erfindungsgemäßen Verfahrens wird bevorzugt zu mindestens 5% und höchstens 20%, bezogen auf die Masse des Separators, aus Zellstoff mit hohem Feinstoffgehalt gebildet.

Der Zellstoff mit hohem Feinstoffgehalt, der in mindestens einem der Schritte (a) bis (e) hinzugefügt wird, wird erfindungsgemäß aus Zellstoff hergestellt, wobei der Zellstoff vorzugsweise aus Nadelhölzern, Laubhölzern oder anderen Pflanzen wie Hanf, Flachs, Jute, Ramie, Kenaf, Kapok, Kokosnuss, Abacá, Sisal, Bambus, Baumwolle oder Espartogras, oder aus Altpapierstoff gewonnen ist. Auch Mischungen aus Zellstoffen verschiedener Herkunft können für die Herstellung des Zellstoffs mit hohem Feinstoffgehalt eingesetzt werden. Besonders bevorzugt sind die Zellstoffe aus Nadelhölzern oder Laubhölzern gewonnen.

Erfindungsgemäß ist der Zellstoff mit hohem Feinstoffgehalt aus mindestens einem der Schritte (a) bis (e) dadurch charakterisiert, dass der Anteil an Fasern mit einer Länge von weniger als 0,2 mm mindestens 70% bezogen auf die aufsummierte Länge der Fasern im Zellstoff mit hohem Feinstoffgehalt beträgt. Bevorzugt beträgt der Anteil der Fasern mit einer Länge von weniger als 0,2 mm mindestens 80%, besonders bevorzugt mindestens 90%, jeweils bezogen auf die aufsummierte Länge der Fasern im Zellstoff mit hohem Feinstoffgehalt. Dieser Gehalt an Feinstoffen kann mittels einer bildanalytischen Methode nach ISO 16065-2:2014 bestimmt werden.

Der Zellstoff mit hohem Feinstoffgehalt aus mindestens einem der Schritte (a) bis (e) kann bevorzugt sekundäre Feinstoffe enthalten. Sekundäre Feinstoffe sind Fasern, deren Länge L weniger als 100 $\mu$m beträgt und deren Dicke D in $\mu$m die Ungleichung

$$D \leq 50 - 0{,}3 \cdot L$$

erfüllt, wobei L in $\mu$m einzusetzen ist. Bevorzugt beträgt der Anteil an sekundären Feinstoffen im Zellstoff mit hohem Feinstoffgehalt mindestens 40%, besonders bevorzugt mindestens 60%, jeweils bezogen auf die aufsummierte Länge der Fasern im Zellstoff mit hohem Feinstoffgehalt. Der Anteil an sekundären Feinstoffen kann ebenfalls mittels einer bildanalytischen Methode nach ISO 16065-2:2014 bestimmt werden.

KURZE BESCHREIBUNG DER FIGUREN

Fig. 1    zeigt in den Figuren 1a bis 1i beispielhaft fibrillierte Fasern regenerierter Cellulose mit einer verzweigten Struktur nach Auflösen eines erfindungsgemäßen Separators in Wasser.

Fig. 2    zeigt in den Figuren 2a bis 2c beispielhaft fibrillierte Fasern regenerierter Cellulose, mit einer verzweigten Struktur an der Abrisskante eines erfindungsgemäßen Separators durch Aufnahme der Bilder mit einem Lichtmikroskop.

Fig. 3    zeigt in den Figuren 3a und 3b beispielhaft fibrillierte Fasern regenerierter Cellulose, die keine verzweigte Struktur aufweisen.

BESCHREIBUNG EINIGER BEVORZUGTER AUSFÜHRUNGSFORMEN

Im Folgenden werden einige bevorzugte Ausführungsformen erfindungsgemäßer Separatoren und des erfindungsgemäßen Verfahrens sowie nicht erfindungsgemäße Separatoren als Vergleichsbeispiel beschrieben.

Eine wässrige Suspension von 4 mm langen fibrillierbaren Fasern regenerierter Cellulose (Lyocell®) mit 1,7 dtex wurde hergestellt, Schritt A, und in einer Kolloidmühle auf einen Mahlgrad von 82 °SR bzw. 93 °SR, gemessen nach ISO 5267-1:1999, gemahlen. Danach wurde die Suspension in einen Stoffauflauf transportiert, Schritt C, und dort Zellstoff mit hohem Feinstoffgehalt in den Stoffauflauf hinzugefügt, Schritt (b). Auf einer Papiermaschine wurde dann mittels der Schritte D bis H eine Faserbahn gebildet, getrocknet und aufgerollt.

Die Mengen an Fasern aus regenerierter Cellulose und an Zellstoff mit hohem Feinstoffgehalt waren so gewählt, dass der Separator aus 85% bis 100% Fasern aus regenerierter Cellulose und 0%, 10% oder 15% Zellstoff mit hohem Feinstoffgehalt gebildet wurde, wobei sich die Prozentangaben auf die Masse des fertiggestellten und getrockneten Separators beziehen. Insgesamt wurden so drei erfindungsgemäße Separatoren S1, S2 und S3 und zwei nicht erfindungsgemäße Separatoren P1 und P2 hergestellt, sowie durch Kalandrieren von S1 ein vierter erfindungsgemäßer Separator S4 und durch Kalandrieren von P1 ein weiterer nicht erfindungsgemäßer Separator P3. Die Eigenschaften von S1, S2, S3, S4 und P1, P2, P3 sind in den Tabellen 1 und 2 zusammengefasst, wobei die Masse an Lyocellfasern, die Masse an Zellstoff mit hohem Feinstoffgehalt (HFP), der Mahlgrad (DR), das Flächengewicht (BW), die Dicke (TH), die Zugfestigkeit in Maschinenrichtung (TS-MD) und der Elastizitätsmodul in Maschinenrichtung (MoE-MD) in Tabelle 1 angegeben sind und für dieselben Separatoren die Porosität (PV), die Luftdurchlässigkeit (AP), die mittlere Fließporengröße (M-PS), die Standardabweichung der mittleren Fließporengröße (SD-PS) und die weiter oben definierte Fließporengröße $D_{90}$ (90%-PS) in Tabelle 2 angegeben sind.

Tabelle 1

|    | Lyocell® | HFP | DR  | BW    | TH    | TS-MD | MoE-MD |
|----|----------|-----|-----|-------|-------|-------|--------|
|    | %        | %   | °SR | g/m²  | μm    | kN/m  | GPa    |
| S1 | 90       | 10  | 93  | 14,3  | 34,5  | 0,82  | 2,79   |
| S2 | 90       | 10  | 93  | 15,0  | 35,1  | 1,04  | 2,98   |
| S3 | 85       | 15  | 82  | 15,6  | 52,9  | 0,85  | 1,85   |
| S4 | 90       | 10  | 93  | 14,3  | 18,6  | 0,67  | 4,86   |
| P1 | 100      | 0   | 93  | 13,5  | 33,9  | 0,76  | 2,40   |
| P2 | 100      | 0   | 82  | 15,5  | 59,9  | 0,53  | 1,29   |
| P3 | 100      | 0   | 93  | 13,5  | 19,4  | 0,65  | 3,76   |

Tabelle 2

|  | PV | AP | M-PS | SD-PS | 90%-PS |
|---|---|---|---|---|---|
|  | % | s | nm | nm | nm |
| S1 | 72 | 62,0 | 175 | 108 | 365 |
| S2 | 72 | 89,4 |  |  |  |
| S3 | 80 | 18,1 | 340 | 446 | 971 |
| S4 | 45 | 164,7 | 109 | 69 | 264 |
| P1 | 73 | 17,4 | 275 | 146 | 426 |
| P2 | 83 | 2,6 | 879 | 545 | 1149 |
| P3 | 52 | 55,6 | 174 | 79 | 319 |

Die Luftdurchlässigkeit (AP) kann als Maß für die Porengröße dienen und es ist erkennbar, dass die erfindungsgemäßen Separatoren S1, S2, verglichen mit P1 und S3 verglichen mit P2, bei vergleichbarer Porosität jeweils eine deutlich niedrigere Luftdurchlässigkeit, also höhere Werte nach Gurley, aufweisen. Das ist ein Hinweis, dass die mittlere Fließporengröße bei den erfindungsgemäßen Separatoren geringer ist, weshalb diese Separatoren besser für die Verwendung in elektrochemischen Elementen geeignet sind als die nicht erfindungsgemäßen Separatoren.

Insbesondere der nicht erfindungsgemäße Separator P2 weist eine sehr hohe Luftdurchlässigkeit, also einen niedrigen Wert nach Gurley, und damit große Poren auf, weshalb die Gefahr besteht, dass in einem elektrochemischen Element, insbesondere einer Lithium-Ionen-Batterie, mit diesem Separator von den Elektroden ausgehend mit der Zeit Dendrite gebildet werden können, was die Lebensdauer und Leistung des elektrochemischen Elements reduziert.

Ein Vergleich der erfindungsgemäßen Separatoren S1, S2 und S3 mit den nicht erfindungsgemäßen Separatoren P1 und P2 ohne Zellstoff mit hohem Feinstoffgehalt zeigt auch den positiven Effekt des Zellstoffs mit hohem Feinstoffgehalt auf die Festigkeit des Separators.

Die Porengrößenverteilung der Separatoren S1 und P1 wurde mittels Kapillarströmungsporosimetrie gemäß ASTM F316-03(2019) Standard Test Methods for Pore Size Characteristics of Membrane Filters by Bubble Point and Mean Flow Pore Test bestimmt.

Für S1 ergab sich eine mittlere Fließporengröße von 175 nm bei einer Standardabweichung der mittleren Fließporengröße von etwa 108 nm, während der nicht erfindungsgemäße Separator P1 eine mittlere Fließporengröße von 275 nm bei einer Standardabweichung der mittleren Fließporengröße von etwa 146 nm aufwies. Der Zellstoff mit hohem Feinstoffgehalt im erfindungsgemäßen Separator S2 bewirkt also eine geringere mittlere Fließporengröße und eine Porengrößenverteilung mit kleinerer Standardabweichung, was sich beides günstig auf die Eigenschaften eines daraus gefertigten elektrochemischen Elements auswirkt.

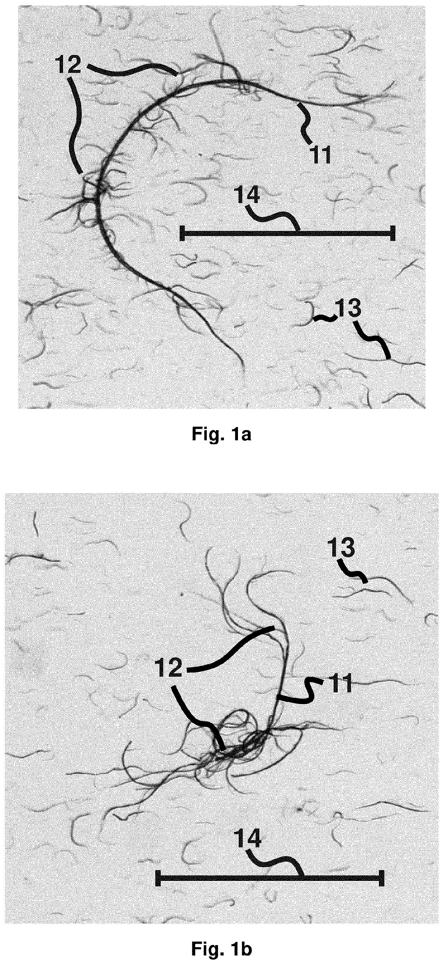

Die Figuren 1a bis 1i zeigen beispielhaft fibrillierte Fasern regenerierter Cellulose mit einer Länge von mindestens 1 mm und einer verzweigten Struktur, wobei in jeder der Figuren 1a bis 1i gleiche Bezugszeichen auch gleichartige Objekte bezeichnen. Dazu wurde ein erfindungsgemäßer Separator in Wasser aufgelöst und Bilder der Fasern mit dem L&W Fiber Tester Plus der Firma Lorentzen & Wettre aufgenommen. Die verzweigte Struktur ist dadurch charakterisiert, dass an die Faser 11 mehrere Fibrillen 12 gebunden sind und so Zweige der Faser 11 bilden. Daneben gibt es auch nicht mehr mit der Faser 11 verbundene Fibrillen 13. Die Länge 14 beträgt in jeder der Figuren 1a bis 1i jeweils 1 mm und zeigt, dass die Faser 11 länger als 1 mm ist. Die Figuren 1a bis 1i dienen nur als Beispiel und fibrillierte Fasern regenerierter Cellulose, wie sie im erfindungsgemäßen Separator vorkommen, können auch eine wesentlich andere Gestalt haben, sofern die wesentlichen Elemente 11 und 12 der verzweigten Struktur vorhanden sind und die Fasern eine Länge von mindestens 1 mm aufweisen.

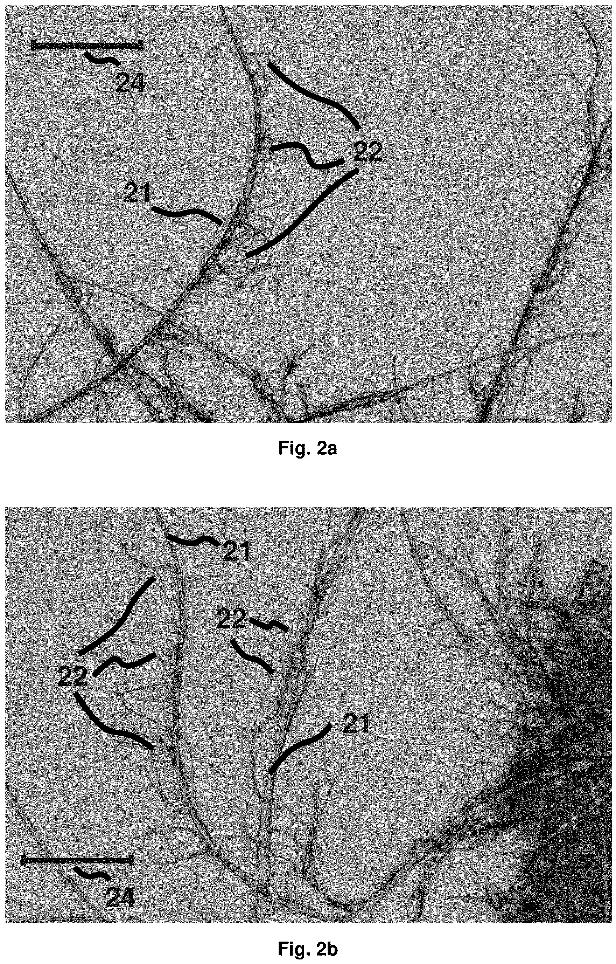

Die Figuren 2a bis 2c zeigen beispielhaft fibrillierte Fasern regenerierter Cellulose mit einer Länge von mindestens 1 mm und einer verzweigten Struktur, wobei in jeder der Figuren 2a bis 2c gleiche Bezugszeichen auch gleichartige Objekte bezeichnen. Dazu wurde ein erfindungsgemäßer Separator in zwei Teile gerissen und an der Abrisskante Bilder der Fasern mit einem Lichtmikroskop aufgenommen. Die verzweigte Struktur ist dadurch charakterisiert, dass an die Faser 21 mehrere Fibrillen 22 gebunden sind und so Zweige der Faser 21 bilden. Die Länge 24 beträgt in jeder der Figuren 2a bis 2c jeweils 200 $\mu$m und zeigt, dass die Faser 21 länger als 1 mm ist. Auch die Figuren 2a bis 2c dienen nur als Beispiel und fibrillierte Fasern regenerierter Cellulose, wie sie im erfindungsgemäßen Separator vorkommen, können auch eine wesentlich andere Gestalt haben, sofern die wesentlichen Elemente 21 und 22 der verzweigten Struktur vorhanden sind und die Fasern eine Länge von mindestens 1 mm aufweisen.

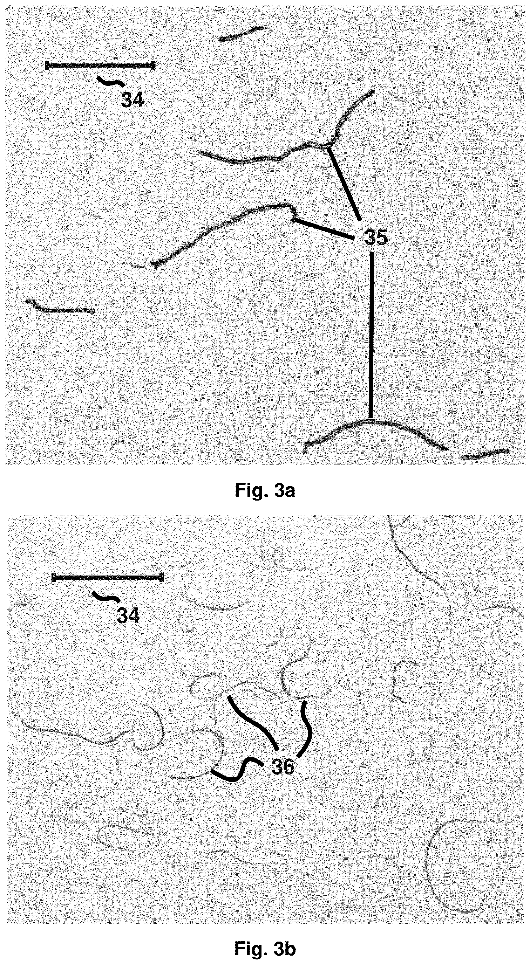

Die Figuren 3a und 3b zeigen beispielhaft fibrillierte Fasern regenerierter Cellulose, die keine verzweigte Struktur aufweisen. Die Bilder wurden ebenfalls mit dem L&W Fiber Tester Plus der Firma Lorentzen & Wettre aufgenommen.

Die Länge 34 beträgt in den Figuren 3a und 3b jeweils 500 $\mu$m. In Figur 3a sind beispielhafte fibrillierte Fasern 35 dargestellt, die durch Mahlung regenerierter Cellulose entstehen, wobei die Mahlung vor allem zu einer Kürzung der Fasern führt. Solche Fasern zeigen keine verzweigte Struktur, weil die Fibrillen von der Faser 35 nicht ausreichend abgelöst sind. Die Fasern 35 bilden kein ausreichend dichtes Netzwerk, um die Feinstoffe im Fasernetzwerk zurückzuhalten.

In Figur 3b sind beispielhafte fibrillierte Fasern 36 dargestellt, die durch eine intensive Mahlung regenerierter Cellulose entstehen, wobei die Mahlung zu einer vollständigen Trennung der Fibrillen von der Faser geführt hat. Die fibrillierten Fasern 36 weisen ebenfalls keine verzweigte Struktur auf und sind daher nicht geeignet ein ausreichend dichtes Fasernetzwerk zu bilden.

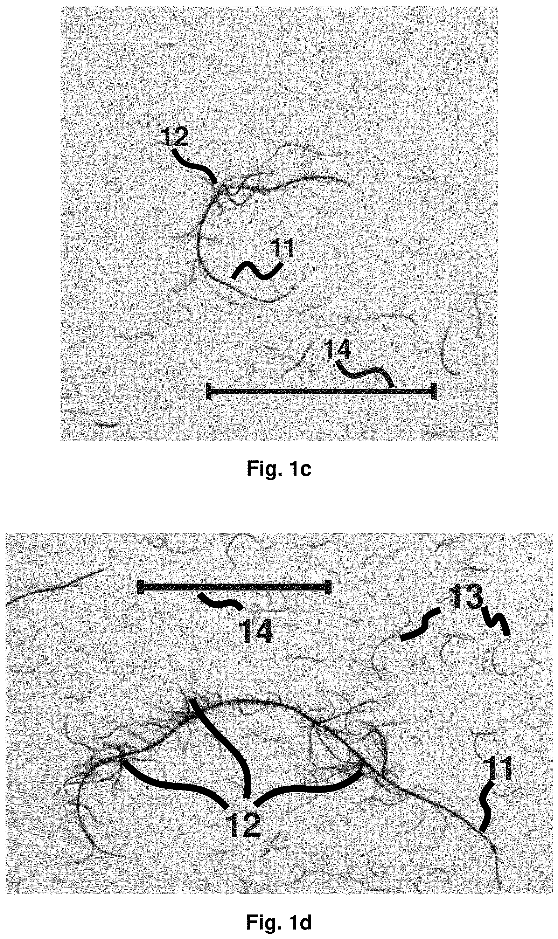

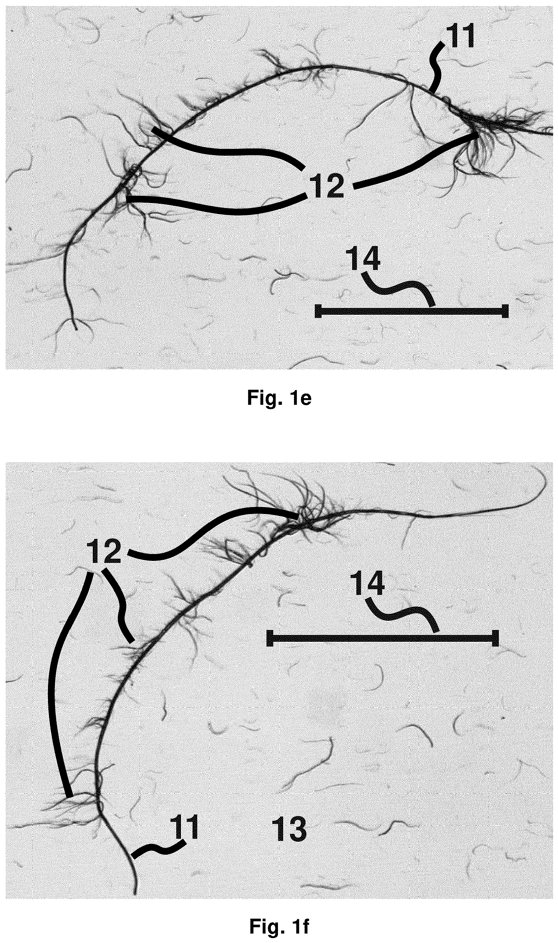

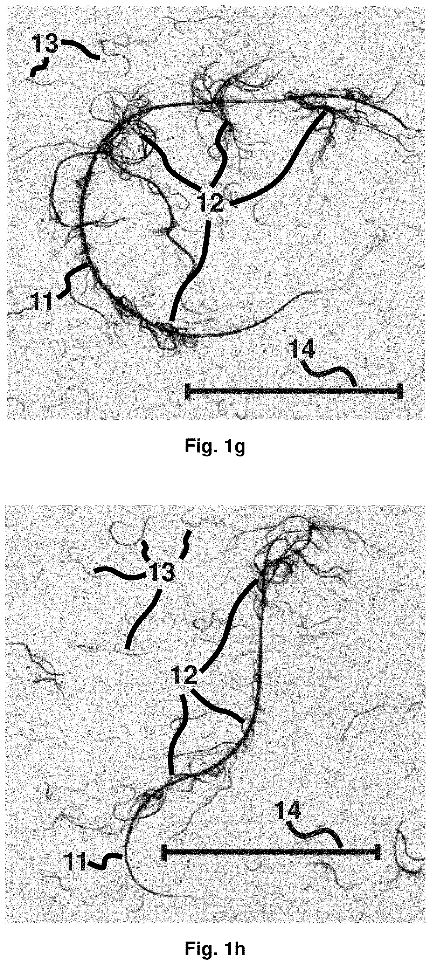

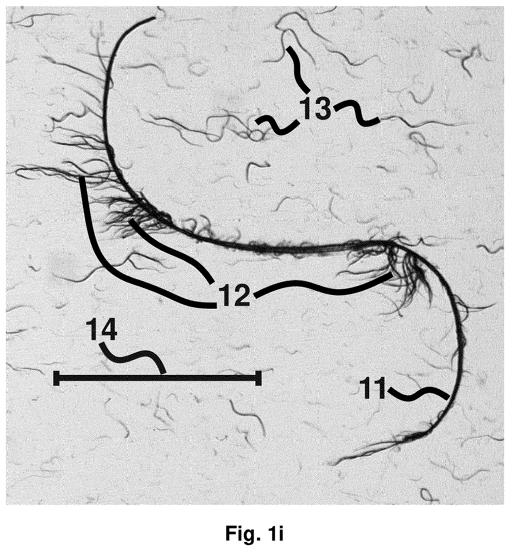

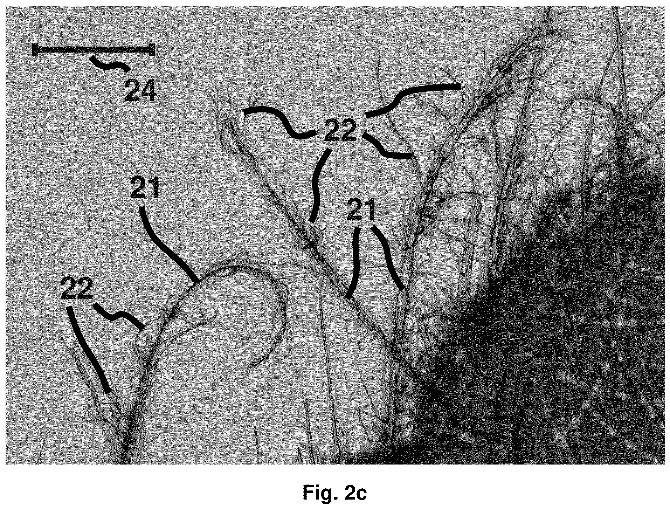

Aus den Figuren 1 bis 3 ist erkennbar, dass die Mahlung der Fasern von großer Bedeutung für die Fasermorphologie ist und nur bei geeigneter Wahl des Mahlverfahrens, beispielsweise in einer Kolloidmühle, können die in den Figuren 1 und 2 dargestellten Fasern mit verzweigter Struktur und einer Länge von mindestens 1 mm in ausreichender Menge erhalten werden.

Der erfindungsgemäße Separator S1 und der nicht erfindungsgemäße Separator P1 wurden auch noch mittels eines Kalanders mit 8 Walzspalten bei einer Linienlast von 150 kN/m kalandriert und so ein weiterer erfindungsgemäßer Separator S4 aus S1 und ein nicht erfindungsgemäßer Separator P3 aus P1 erhalten. Die Porengrößenverteilungen der Separatoren S4 und P3 wurden mittels Kapillarströmungsporosimetrie bestimmt. Ein Vergleich von S1 mit S4 und P1 mit P3 zeigt, dass durch Kalandrieren die mittlere Fließporengröße reduziert werden kann und parallel dazu nimmt auch die Luftdurchlässigkeit ab.

Aus den erfindungsgemäßen Separatoren S1, S2 und S3 wurden Lithium-Ionen-Batterien hergestellt, und deren prinzipielle Funktion festgestellt, sodass die Separatoren jedenfalls für die Verwendung in Lithium-Ionen-Batterien oder anderen elektrochemischen Elementen geeignet sind.

Auch die nicht erfindungsgemäßen Separatoren P1 und P2 sind prinzipiell für Lithium-Ionen-Batterien oder andere elektrochemische Elemente geeignet, weisen aber keine so guten Eigenschaften auf, wie die erfindungsgemäßen Separatoren.

**Patentansprüche**

1. Separator für ein elektrochemisches Element, wobei mindestens 70% und höchstens 95% der Masse des Separators durch fibrillierte Fasern regenerierter Cellulose und mindestens 3% und höchstens 30% der Masse des Separators durch Zellstoff mit hohem Feinstoffgehalt gebildet sind,
und wobei im Zellstoff mit hohem Feinstoffgehalt der Anteil an Fasern mit einer Länge von weniger als 0,2 mm mindestens 70% bezogen auf die aufsummierte Länge der Fasern im Zellstoff mit hohem Feinstoffgehalt beträgt, **dadurch gekennzeichnet, dass** von den fibrillierten Fasern der regenerierten Cellulose mit einer Länge von mindestens 1 mm mindestens 10 %, bezogen auf die Anzahl, eine verzweigte Struktur aufweisen.

2. Separator nach Anspruch 1, wobei von den fibrillierten Fasern der regenerierten Cellulose mit einer Länge von mindestens 1 mm mindestens 15 %, vorzugsweise 20 %, jeweils bezogen auf die Anzahl, eine verzweigte Struktur aufweisen, und/oder wobei der Separator zu mindestens 75% und höchstens 90% bezogen auf seine Masse aus fibrillierten Fasern regenerierter Cellulose gebildet ist.

3. Separator nach einem der vorhergehenden Ansprüche, bei dem die Fasern regenerierter Cellulose in einem Lösungsmittel gesponnene Fasern sind, und insbesondere durch Lyocell® Fasern gebildet werden, und/oder bei dem die mittlere lineare Dichte der Fasern regenerierter Cellulose vor dem Fibrillieren mindestens 0,8 g/10000 m (0,8 dtex) und höchstens 3,0 g/10000 m (3,0 dtex), vorzugsweise mindestens 1,0 g/10000 m (1,0 dtex) und höchstens 2,5 g/10000 m (2,5 dtex) beträgt.

4. Separator nach einem der vorhergehenden Ansprüche, bei dem die mittlere Länge der Fasern regenerierter Cellulose vor dem Fibrillieren mindestens 2 mm und höchstens 8 mm, vorzugsweise mindestens 3 mm und höchstens 6 mm beträgt, und/oder der zu mindestens 5% und höchstens 20% bezogen auf seine Masse aus Zellstoff mit hohem Feinstoffgehalt gebildet ist, und/oder bei dem der Zellstoff mit hohem Feinstoffgehalt aus Nadelhölzern, Laubhölzern oder anderen Pflanzen, insbesondere Hanf, Flachs, Jute, Ramie, Kenaf, Kapok, Kokosnuss, Abacä, Sisal, Bambus, Baumwolle oder Espartogras, aus Altpapierstoff, oder aus Mischungen einer oder mehrerer der genannten Quellen gewonnen ist.

5. Separator nach einem der vorhergehenden Ansprüche, bei dem der Anteil der ZellstoffFasern mit einer Länge von weniger als 0,2 mm mindestens 80%, bevorzugt mindestens 90% bezogen auf die aufsummierte Länge der Fasern im Zellstoff mit hohem Feinstoffgehalt beträgt, und/oder bei dem der Zellstoff mit hohem Feinstoffgehalt durch nanofibrillierten Zellstoff oder mikrofibrillierten Zellstoff gebildet wird.

6. Separator nach einem der vorhergehenden Ansprüche, wobei der Zellstoff mit hohem Feinstoffgehalt sekundäre Feinstoffe enthält, die durch Fasern gebildet sind, deren Länge L in $\mu$m weniger als 100 beträgt und deren Dicke D in $\mu$m die Ungleichung

$$D \leq 50 - 0{,}3 \cdot L$$

erfüllt, wobei der Anteil an sekundären Feinstoffen im Zellstoff mit hohem Feinstoffgehalt mindestens 40%, bevorzugt mindestens 60% beträgt, jeweils bezogen auf die aufsummierte Länge der Fasern im Zellstoff mit hohem Feinstoffgehalt.

7. Separator nach einem der vorgehenden Ansprüche, der weiterhin eine oder mehrere Komponenten enthält, die ausgewählt sind aus der Gruppe bestehend aus Polyvinylalkohol, Polyethylenglykol, Polyvinylidenflourid, Guaran, Stärke, Carboxymethylcellulose, Methylcellulose, Dialdehdyen, insbesondere Glyoxal, und anorganischen Füllstoffen, insbesondere Kaolin, Titandioxid (TiO$_2$), Siliziumdioxid (SiO$_2$), Aluminiumoxid (Al$_2$O$_3$), Zirkoniumdioxid (ZrO$_2$) oder Calciumcarbonat (CaCO$_3$), und/oder der neben den genannten fibrillierten Fasern aus regenerierter Cellulose und dem Zellstoff mit hohem Feinstoffgehalt weitere Fasern enthält, die ausgewählt sind aus der Gruppe bestehend aus Fasern aus Cellulosederivaten, nicht fibrillierten Fasern aus regenerierter Cellulose, Glasfasern, und Kunststofffasern, wobei die Kunststofffasern insbesondere Fasern aus Polyolefinen, vorzugsweise Polyethylen oder Polypropylen; Fasern aus Polyestern, vorzugsweise Polyethylenterephthalat oder Polymilchsäuren; Fasern aus Polyethern, Polysulfonen, Polyurethanen, Polyamiden, Polyimiden, Polyvinylalkohol, Polyacrylnitril, Polyphenylensulfid oder aus Ethylen-Vinylacetat-Copolymeren sind, wobei der Anteil dieser weiteren Fasern insgesamt vorzugsweise höchstens 10%, besonders bevorzugt höchstens 5% der Masse des Separators beträgt.

8. Separator nach einem der vorhergehenden Ansprüche, dessen nach ISO 534:2011 an einem einzelnen Blatt bestimmte Dicke mindestens 10 $\mu$m und höchstens 55 $\mu$m, bevorzugt mindestens 12 $\mu$m und höchstens 35 $\mu$m beträgt, und/oder dessen nach ISO 536:2012 bestimmtes Flächengewicht mindestens 8 g/m$^2$ und höchstens 30 g/m$^2$, bevorzugt mindestens 12 g/m$^2$ und höchstens 25 g/m$^2$ beträgt.

9. Separator nach einem der vorhergehenden Ansprüche, dessen Porosität $\mu$ mindestens 30% und höchstens 85%, bevorzugt mindestens 35% und höchstens 75% beträgt, wobei die Porosität $\mu$ gemäß

$$\mu = 1 - \frac{2}{3}\frac{m}{d}$$

zu berechnen ist, wobei m das Flächengewicht in g/m$^2$ und d die Dicke in $\mu$m ist und die Porosität als Wert zwischen 0 und 1 erhalten wird und durch Multiplikation mit 100 in einen Prozentsatz umgewandelt werden kann, und/oder dessen mithilfe einer Kapillarströmungsporosimetrie gemäß ASTM F316-03(2019) gemessene mittlere Fließporengröße mindestens 40 nm und höchstens 1000 nm, bevorzugt mindestens 50 nm und höchstens 800 nm beträgt, und/oder bei dem die Standardabweichung der mithilfe einer Kapillarströmungsporosimetrie gemäß ASTM F316-03(2019) gemessenen mittleren Fließporengröße mindestens 3 nm und höchstens 200 nm, besonders bevorzugt mindestens 3 nm und höchstens 100 nm beträgt, und/oder der einen Wert D$_{90}$ für die Verteilung der Fließporengröße aufweist, der mindestens 100 nm und höchstens 1500 nm, bevorzugt mindestens 200 nm und höchstens 1000 nm beträgt, wobei D$_{90}$ so zu bestimmen ist, dass 90% des Durchflusses durch Poren erfolgt, deren Fließporengrößen den Wert D$_{90}$ nicht überschreiten.

10. Separator nach einem der vorhergehenden Ansprüche, dessen Zugfestigkeit nach ISO 1924-2:2008 in mindestens einer Richtung mindestens 0,3 kN/m und höchstens 2 kN/m, bevorzugt mindestens 0,5 kN/m und höchstens 1,5 kN/m beträgt, und/oder dessen Bruchdehnung nach ISO 1924-2:2008 in mindestens einer Richtung mindestens 0,5% und höchstens 4,0%, bevorzugt mindestens 1,0% und höchstens 3,5% beträgt und/oder dessen Elastizitätsmodul, ermittelt in einer Messung des Kraft-Dehnungs-Verlaufs gemäß ISO 1924-2:2008, in mindestens einer Richtung mindestens 1 GPa und höchstens 8 GPa, bevorzugt mindestens 2 GPa und höchstens 6 GPa beträgt, und/oder dessen gemäß ISO 5636-5:2013 bestimmte Luftdurchlässigkeit nach Gurley mindestens 10 s und höchstens 450 s, bevorzugt mindestens 40 s und höchstens 300 s beträgt.

11. Elektrochemisches Element, welches zwei Elektroden, einen Elektrolyten und einen Separator nach einem der Ansprüche 1 bis 10 umfasst, wobei das elektrochemische Element vorzugsweise durch einen Kondensator, einen Hybridkondensator, einen Superkondensator oder einen Akkumulator gebildet ist, wobei das elektrochemische Element vorzugsweise eine Lithium-Ionen-Batterie ist.

12. Verfahren zur Herstellung eines Separators für ein elektrochemisches Element, das die folgenden Schritte umfasst,

A - Herstellen einer wässrigen Suspension aus fibrillierbaren Fasern regenerierter Cellulose,

B - Fibrillieren der Fasern aus regenerierter Cellulose aus Schritt A,

C - Einbringen der wässrigen Suspension aus fibrillierten Fasern regenerierter Cellulose aus Schritt B in einen Stoffauflauf,

D - Aufbringen der wässrigen Suspension aus Schritt C auf ein umlaufendes Sieb zur Bildung einer Faserbahn,

E - Entwässern der Faserbahn auf dem umlaufenden Sieb,

F - Trocknen der Faserbahn in einer ersten Trocknungsvorrichtung,

G - Trocknen der Faserbahn in einer zweiten Trocknungsvorrichtung,

H - Aufrollen der den Separator bildenden Faserbahn,

wobei die Fasern regenerierter Cellulose in Schritt C so fibrilliert werden, dass von den Fasern mit einer Länge von mindestens 1 mm mindestens 10% der Fasern, bezogen auf die Anzahl, eine verzweigte Struktur aufweisen, und

wobei Zellstoff mit hohem Feinstoffgehalt in mindestens einem der folgenden Schritte hinzugefügt wird:

(a) in Schritt A durch Hinzufügen zur wässrigen Suspension,

(b) in Schritt C durch Hinzufügen in den Stoffauflauf,

(c) in Schritt D durch Aufbringen aus einem weiteren Stoffauflauf auf die auf dem umlaufenden Sieb gebildete Faserbahn,

(d) zwischen den Schritten E und F durch Auftrag auf die Faserbahn in einer Auftragsvorrichtung, oder

(e) zwischen Schritt G und H durch Auftrag auf die Faserbahn in einer Auftragsvorrichtung, und

wobei im Zellstoff mit hohem Feinstoffgehalt mindestens 70% der Fasern, bezogen auf die aufsummierte Länge der Fasern, eine Länge von weniger als 0,2 mm aufweisen, und

wobei mindestens 70% und höchstens 95% der Masse des Separators nach dem Trocknen in Schritt G durch fibrillierte Fasern regenerierter Cellulose und mindestens 3% und höchstens 30% der Masse des Separators durch Zellstoff mit hohem Feinstoffgehalt gebildet werden, und wobei der Schritt B in einer Kolloidmühle durchgeführt wird.

13. Verfahren nach Anspruch 12, bei dem das Fibrillieren in Schritt B so erfolgt, dass die Fasern regenerierter Cellulose mehr fibrilliert und weniger geschnitten werden, und/oder bei dem Schritt B so ausgeführt wird, dass der Mahlgrad nach Schopper Riegler (°SR), gemessen gemäß ISO 5267-1:1999, mindestens 70 °SR und höchstens 100 °SR, bevorzugt mindestens 80 °SR und höchstens 95 °SR beträgt, und/oder, bei dem der Schritt B so ausgeführt wird, dass in den fibrillierten Fasern der regenerierten Cellulose nach Schritt B mindestens 30% und höchstens 70%, bevorzugt mindestens 40% und höchstens 65% der aufsummierten Faserlänge durch Fasern mit einer Länge von weniger als 0,2 mm gebildet werden, und/oder bei dem mindestens die Schritte C bis G auf einer Papiermaschine durchgeführt werden.

14. Verfahren nach einem der Ansprüche 12 oder 13, bei dem die Faserbahn zwischen den Schritten G und H kalandriert wird, wobei die Faserbahn durch mindestens einen, vorzugsweise durch mindestens 2 und höchstens 14, und besonders vorzugsweise durch mindestens 5 und höchstens 14 Walzspalte durchgeführt wird, wobei ein mechanischer Druck auf die Faserbahn ausgeübt wird, und wobei eine Linienlast, die in zumindest einem Teil der Walzspalten auf die Faserbahn ausgeübt wird, vorzugsweise mindestens 20 kN/m und höchstens 600 kN/m, bevorzugt mindestens 60 kN/m und höchstens 400 kN/m beträgt, wobei das Kalandrieren vorzugsweise zwischen den Schritten (e) und H durchgeführt wird.

15. Verfahren nach einem der Ansprüche 12 bis 14, bei dem der Auftrag zumindest eines Teils des Zellstoffs mit hohem Feinstoffgehalt in Schritt (d) durch eine Filmpresse oder ein Streichaggregat erfolgt, und/oder bei dem der Auftrag zumindest eines Teils des Zellstoffs mit hohem Feinstoffgehalt in Schritt (e) durch Drucken oder Sprühen erfolgt, wobei der Auftrag des Zellstoffs mit hohem Feinstoffgehalt vorzugsweise auf beide Seiten erfolgt.

**Claims**

1. Separator for an electrochemical element, wherein at least 70% and at most 95% of the mass of the separator is formed by fibrillated fibers of regenerated cellulose and at least 3% and at most 30% of the mass of the separator is formed by pulp having a high fines content,
and wherein in the pulp having a high fines content, the proportion of fibers with a length of less than 0.2 mm is at least 70% with respect to the total length of the fibers in the pulp having a high fines content, **characterized in that** of the fibrillated fibers of regenerated cellulose with a length of at least 1 mm, at least 10% with respect to number, have a branched structure.

2. Separator according to claim 1, wherein of the fibrillated fibers of regenerated cellulose with a length of at least 1 mm, at least 15%, preferably 20%, each with respect to number have a branched structure,
and/or wherein at least 75% and at most 90% of the separator with respect to its mass is formed from fibrillated fibers of regenerated cellulose.

3. Separator according to one of the preceding claims, wherein the fibers of regenerated cellulose are solvent-spun fibers and are in particular formed by Lyocell® fibers, and/or wherein the mean linear density of the fibers of regenerated cellulose before fibrillation is at least 0.8 g/10000 m (0.8 dtex) and at most 3.0 g/10000 m (3.0 dtex), preferably at least 1.0 g/10000 m (1.0 dtex) and at most 2.5 g/10000 m (2.5 dtex).

4. Separator according to one of the preceding claims, wherein the mean length of the fibers of regenerated cellulose before fibrillation is at least 2 mm and at most 8 mm, preferably at least 3 mm and at most 6 mm,

    and/or which is formed by at least 5% and at most 20% of pulp having a high fines content with respect to its mass,
    and/or wherein the pulp having a high fines content is sourced from coniferous woods, deciduous woods or other plants, in particular hemp, flax, jute, ramie, kenaf, kapok, coconut, abaca, sisal, bamboo, cotton or esparto grass, from recycled pulp, or from mixtures of one or more of said sources.

5. Separator according to one of the preceding claims, wherein the proportion of pulp fibers with a length of less than 0.2 mm is at least 80%, preferably at least 90% with respect to the total length of the fibers in the pulp having a high fines content,
and/or wherein the pulp having a high fines content is formed by nano-fibrillated pulp or micro-fibrillated pulp.

6. Separator according to one of the preceding claims, wherein the pulp having a high fines content contains secondary fines which are formed by fibers the length L of which in $\mu$m is less than 100 and the thickness D in $\mu$m of which satisfies the inequality

$$D \le 50 - 0.3 \cdot L,$$

    wherein the proportion of secondary fines in the pulp having a high fines content is at least 40%, preferably at least 60%, each with respect to the total length of the fibers in the pulp having a high fines content.

7. Separator according to one of the preceding claims, which further contains one or more components selected from the group consisting of polyvinyl alcohol, polyethylene glycol, polyvinylidene fluoride, guarana, starch, carboxymethyl cellulose, methylcellulose, dialdehydes, in particular glyoxal, and inorganic fillers, in particular kaolin, titanium dioxide ($TiO_2$), silicon dioxide ($SiO_2$), aluminum oxide ($Al_2O_3$), zirconium dioxide ($ZrO_2$) or calcium carbonate ($CaCO_3$), and/or which, in addition to said fibrillated fibers of regenerated cellulose and the pulp having a high fines content contains further fibers which are selected from the group consisting of fibers from cellulose derivatives, non-fibrillated fibers from regenerated cellulose, glass fibers and plastic fibers, wherein the plastic fibers are in particular fibers from polyolefins, preferably polyethylene or polypropylene; fibers from polyesters, preferably polyethylene terephthalate or polylactic acids; fibers from polyethers, polysulfones, polyurethanes, polyamides, polyimides, polyvinyl alcohol, polyacrylonitrile, polyphenylene sulfide or from ethylene-vinylacetate co-polymers, wherein the total proportion of these further fibers is preferably at most 10%, particularly preferably at most 5%, of the mass of the separator.

8. Separator according to one of the preceding claims, the thickness of which, determined on a single sheet in accordance with ISO 534:2011, is at least 10 $\mu$m and at most 55 $\mu$m, preferably at least 12 $\mu$m and at most 35 $\mu$m,

and/or the basis weight of which, determined in accordance with ISO 536:2012, is at least 8 g/m$^2$ and at most 30 g/m$^2$, preferably at least 12 g/m$^2$ and at most 25 g/m$^2$.

9. Separator according to one of the preceding claims, the porosity $\mu$ of which is at least 30% and at most 85%, preferably at least 35% and at most 75%, wherein the porosity $\mu$ is determined by

$$\mu = 1 - \frac{2}{3}\frac{m}{d}$$

wherein m is the basis weight in g/m$^2$, and d is the thickness in $\mu$m and the porosity is obtained as a value between 0 and 1 and is converted to a percentage by multiplying by 100,
and/or the mean flow pore size of which, measured by capillary flow porosimetry in accordance with ASTM F316-03(2019), is at least 40 nm and at most 1000 nm, preferably at least 50 nm and at most 800 nm,
and/or wherein the standard deviation of the mean flow pore size measured in accordance with ASTM F316-03(2019) is at least 3 nm and at most 200 nm, particularly preferably at least 3 nm and at most 100 nm,
and/or which has a value D90 for the distribution of the flow pore size which is at least 100 nm and at most 1500 nm, preferably at least 200 nm and at most 1000 nm, wherein $D_{90}$ is to be determined such that 90% of the flow is through pores the flow pore sizes of which do not exceed the value $D_{90}$.

10. Separator according to one of the preceding claims, the tensile strength of which in accordance with ISO 1924-2:2008 in at least one direction is at least 0.3 kN/m and at most 2 kN/m, preferably at least 0.5 kN/m and at most 1.5 kN/m,

and/or the elongation at break of which in accordance with ISO 1924-2:2008 in at least one direction is at least 0.5% and at most 4.0%, preferably at least 1.0% and at most 3.5%,
and/or the modulus of elasticity of which, determined in a measurement of the force-strain curve in accordance with ISO 1924-2:2008 in at least one direction is at least 1 GPa and at most 8 GPa, preferably at least 2 GPa and at most 6 GPa,
and/or the air permeability according to Gurely of which, determined in accordance with ISO 5636-5:2013, is at least 10 s and at most 450 s, preferably at least 40 s and at most 300 s.

11. Electrochemical element which comprises two electrodes, an electrolyte and a separator according to one of claims 1 to 10, wherein the electrochemical element is preferably formed by a capacitor, a hybrid capacitor, a supercapacitor or an accumulator, wherein the electrochemical element is preferably a lithium-ion battery.

12. Process for manufacturing a separator for an electrochemical element, which comprises the following steps,

A - manufacturing an aqueous suspension of fibers of regenerated cellulose which can be fibrillated,
B - fibrillating the fibers of regenerated cellulose from step A,
C - adding the aqueous suspension of fibrillated fibers of regenerated cellulose from step B to a head box,
D - applying the aqueous suspension from step C to a running wire to form a fiber web,
E - de-watering the fiber web on the running wire,
F - drying the fiber web in a first drying device,
G - drying the fiber web in a second drying device,
H - winding up the separator formed by the fiber web,
wherein the fibers of regenerated cellulose in step C are fibrillated such that of the fibers with a length of at least 1 mm, at least 10% of the fibers, with respect to their number, have a branched structure, and
wherein the pulp having a high fines content is added in at least one of the following steps,

(a) in step A, by addition to the aqueous suspension,
(b) in step B, by addition to the head box,
(c) in step D, by application to the fiber web formed on the running wire from a further head box,
(d) between the steps E and F, by application to the fiber web in an application device, or
(e) between steps G and H, by application to the fiber web in an application device, and wherein in the pulp having a high fines content, at least 70% of the fibers with respect to the total length of the fibers have a length of less than 0.2 mm, and

wherein at least 70% and at most 95% of the mass of the separator after drying in step G is formed by fibrillated fibers of regenerated cellulose and at least 3% and at most 30% of the mass of the separator is formed by pulp having a high fines content, and wherein the step B is carried out in a colloid mill.

13. Process according to claim 12, wherein the fibrillation in step B is carried out such that the fibers of regenerated cellulose are fibrillated more and cut less,

and/or wherein step B is carried out such that the degree of refining according to Schopper Riegler (°SR), measured in accordance with ISO 5267-1: 1999, is at least 70 °SR and at most 100 °SR, preferably at least 80 °SR and at most 95 °SR,
and/or wherein the step B is carried out such that in the fibrillated fibers of regenerated cellulose after step B, at least 30% and at most 70%, preferably at least 40% and at most 65% of the total length of the fibers is formed by fibers with a length of less than 0.2 mm, and/or wherein at least the steps C to G are carried out on a paper machine.

14. Process according to one of claims 12 or 13, wherein the fiber web is calendered between steps G and H,

wherein the fiber web is passed through at least one nip, preferably at least 2 and at most 14, and particularly preferably through at least 5 and at most 14 nips, wherein mechanical pressure is exerted on the fiber web, and wherein a line load which is exerted on the fiber web in at least a part of the nips is preferably at least 20 kN/m and at most 600 kN/m, preferably at least 60 kN/m and at most 400 kN/m, wherein the calendering is preferably carried out between steps (e) and H.

15. Process according to one of claims 12 to 14, wherein the application of at least a part of the pulp having a high fines content in step (d) is carried out by a film press or a coating device, and/or wherein the application of at least a part of the pulp having a high fines content in step (e) is carried out by printing or spraying, wherein the application of the pulp having a high fines content is preferably on both sides.

**Revendications**

1. Séparateur pour un élément électrochimique, dans lequel au moins 70 % et au maximum 95 % de la masse du séparateur sont constitués de fibres fibrillées de cellulose régénérée et au moins 3 % et au maximum 30 % de la masse du séparateur sont constitués de cellulose avec une teneur élevée en particules fines, et dans lequel, dans la cellulose à haute teneur en matières fines, la part de fibres avec une longueur inférieure à 0,2 mm représente au moins 70 % de la longueur cumulée des fibres dans la cellulose à haute teneur en matières fines, **caractérisé en ce que**, parmi les fibres fibrillées de la cellulose régénérée avec une longueur d'au moins 1 mm, au moins 10 % de leur nombre présentent une structure ramifiée.

2. Séparateur selon la revendication 1, dans lequel, parmi les fibres fibrillées de la cellulose régénérée avec une longueur d'au moins 1 mm, au moins 15 %, de préférence 20 % de leur nombre présentent une structure ramifiée et/ou dans lequel le séparateur est constitué, à hauteur d'au moins 75 % et de maximum 90 % de sa masse, de fibres fibrillées de cellulose régénérée.

3. Séparateur selon l'une des revendications précédentes, dans lequel les fibres de cellulose régénérée sont des fibres tissées dans un solvant et plus particulièrement sont constituées de fibres de Lyocell® et/ou dans lequel la densité linéaire moyenne des fibres de cellulose régénérée avant la fibrillation est d'au moins 0,8 g/10 000 m (0,8 dtex) et de maximum 3,0 g/10 000 m (3,0 dtex), de préférence d'au moins 1,0 g/10 000 m (1,0 dtex) et de maximum 2,5 g/10 000 m (2,5 dtex).

4. Séparateur selon l'une des revendications précédentes, dans lequel la longueur moyenne des fibres de cellulose régénérée avant la fibrillation est d'au moins 2 mm et de maximum 8 mm, de préférence d'au moins 3 mm et de maximum 6 mm et/ou qui est constitué, à hauteur d'au moins 5 % et de maximum 20 % de sa masse, de cellulose à haute teneur en matières fines et/ou dans lequel la cellulose à haute teneur en matières fines est extraite de bois de résineux, de bois de feuillus ou d'autres plantes, plus particulièrement le chanvre, le lin, la jute, la ramie, le kenaf, le kapok, la noix de coco, l'abaca, le sisal, le bambou, le coton ou l'alfa, de pâte à papier recyclée ou de mélanges d'une ou plusieurs des sources mentionnées.

5. Séparateur selon l'une des revendications précédentes, dans lequel la part de fibres de cellulose avec une longueur d'au moins 0,2 mm représente au moins 80 %, de préférence, au moins 90 % de la longueur cumulée des fibres dans la cellulose à haute teneur en matières fines et/ou dans lequel la cellulose à haute teneur en matières fines est constituée de cellulose nano-fibrillée ou de cellulose micro-fibrillée.

6. Séparateur selon l'une des revendications précédentes, dans lequel la cellulose à haute teneur en matières fines contient des matières fines secondaires qui sont constituées de fibres dont la longueur L en $\mu$m est inférieure à 100 et dont l'épaisseur D en $\mu$m respecte l'inégalité

$$D \leq 50 - 0{,}3 \cdot L$$

dans lequel la part de matières fines secondaires dans la cellulose à haute teneur en matières fines représente au moins 40 %, de préférence au moins 60 % de la longueur cumulée des fibres dans la cellulose à haute teneur en matières fines.

7. Séparateur selon l'une des revendications précédentes, qui contient en outre un ou plusieurs composants sélectionnés dans le groupe constitué de : alcool polyvinylique, polyéthylène glycol, polyfluorure de vinyle, gomme de guar, amidon, carboxyméthylcellulose, méthylcellulose, dialdéhyde, plus particulièrement le glyoxal et des charges inorganiques, plus particulièrement le kaolin, dioxyde de titane ($TiO_2$), dioxyde de silicium ($SiO_2$), oxyde d'aluminium ($Al_2O_3$), dioxyde de zirconium ($ZrO_2$) ou carbonate de calcium ($CaCO_3$) et/ou qui, en plus des fibres fibrillées mentionnées de cellulose régénérée et de la cellulose à haute teneur en matières fines, contient d'autres fibres de dérivés de cellulose, des fibres non fibrillées de cellulose régénérée, des fibres de verre et des fibres de matière plastique, dans lequel les fibres de matière plastique sont plus particulièrement des fibres de polyoléfines, de préférence du polyéthylène ou du polypropylène ; des fibres de polyesters, de préférence du polyéthylène téréphtalate ou des acides polylactiques ; des fibres de polyéthers, polysulfones, polyuréthanes, polyamides, polyimides, alcool polyvinylique, polyacryle nitrile, sulfure de polyphénylène ou copolymères éthylène-acétate de vinyle, dans lequel la part de ces fibres supplémentaires représente au total de préférence au maximum 10 %, plus particulièrement de préférence au maximum 5 % de la masse du séparateur.

8. Séparateur selon l'une des revendications précédentes, dont l'épaisseur, déterminée sur une seule feuille selon ISO 534:2011, est d'au moins 10 $\mu$m et de maximum 55 $\mu$m, de préférence d'au moins 12 $\mu$m et de maximum 35 $\mu$m et/ou dont le poids surfacique, déterminé selon ISO 536:2012 est d'au moins 8 g/m$^2$ et de maximum 30 g/m$^2$, de préférence d'au moins 12 g/m$^2$ et de maximum 25 g/m$^2$.

9. Séparateur selon l'une des revendications précédentes, dont la porosité $\mu$ est d'au moins 30 % et de maximum 85 %, de préférence d'au moins 35 % et de maximum 75 %, dans lequel la porosité $\mu$ est calculée selon

$$\mu = 1 - 2/3 \; m/d$$

dans lequel m est le poids surfacique en g/m$^2$ et d est l'épaisseur en $\mu$m et la porosité est une valeur entre 0 et 1 et peut être convertie en pourcentage par une multiplication par 100 et/ou dont la taille moyenne des pores, mesurée à l'aide d'une porosimétrie par écoulement capillaire selon ASTL F316-03(2019), est d'au moins 40 nm et de maximum 1 000 nm, de préférence d'au moins 50 nm et de maximum 800 nm et/ou dans lequel l'écart standard de la taille moyenne des pores, mesurée à l'aide d'une porosimétrie par écoulement capillaire selon ASTL F316-03(2019)est d'au moins 3 nm et de maximum 200 nm, plus particulièrement de préférence d'au moins 3 nm et de maximum 100 nm et/ou qui présente une valeur $D_{90}$, pour la répartition de la taille des pores, qui est d'au moins 100 nm et de maximum 1500 nm, de préférence d'au moins 200 nm et de maximum 1 000 nm, dans lequel $D_{90}$ doit être déterminée de sorte que 90 % de l'écoulement a lieu à travers des pores dont la taille ne dépasse pas la valeur $D_{90}$.

10. Séparateur selon l'une des revendications précédentes, dont la résistance à la traction selon ISO 1924-2:2008 dans au moins une direction est d'au moins 0,3 kN/m et de maximum 2 kN/m, de préférence d'au moins 0,5 kN/m et de maximum 1,5 kN/m et/ou dont l'allongement à la rupture selon ISO 1924-2:2008 dans au moins une direction est d'au moins 0,5 % et de maximum 4,0 %, de préférence d'au moins 1,0 % et de maximum 3,5 % et/ou dont le module d'élasticité, déterminé dans une mesure du tracé force-allongement selon ISO 1924-2:2008 dans au moins une direction est d'au moins 1 GPa et de maximum 8 GPa, de préférence d'au moins 2 GPa et de maximum 6 GPa et/ou dont la perméabilité à l'air de Gurley, déterminée selon ISO 5636-5:2013, est d'au moins 10 s et de maximum 450 s, de préférence d'au moins 40 s et de maximum 300 s.

11. Élément électrochimique qui comprend deux électrodes, un électrolyte et un séparateur selon l'une des revendications 1 à 10, dans lequel l'élément électrochimique est constitué de préférence d'un condensateur, d'un condensateur hybride, d'un super-condensateur ou d'un accumulateur, dans lequel l'élément électrochimique est de préférence une batterie lithium-ion.

12. Procédé de fabrication d'un séparateur pour un élément électrochimique, qui comprend les étapes suivantes

A - réalisation d'une suspension aqueuse de fibres fibrillées de cellulose régénérée,
B - fibrillation des fibres de cellulose régénérée de l'étape A,
C - introduction de la suspension aqueuse de fibres fibrillées de cellulose régénérée de l'étape B dans une alimentation,
D - application de la suspension aqueuse de l'étape C sur un tamis rotatif pour la formation d'une bande de fibres,
E - déshydratation de la bande de fibres sur le tamis rotatif,
F - séchage de la bande de fibres dans un premier dispositif de séchage,
G - séchage de la bande de fibres dans un deuxième dispositif de séchage,
H - enroulement de la bande de fibres constituant le séparateur,
dans lequel les fibres de cellulose régénérée dans l'étape C sont fibrillées de sorte que, parmi les fibres avec une longueur d'au moins 1 mm, au moins 10 % du nombre de fibres présentent une structure ramifiée et dans lequel une cellulose à haute teneur en matières fines est ajoutée dans au moins une des étapes suivantes :

(a) à l'étape A par ajout à la suspension aqueuse,
(b) à l'étape C par ajout dans l'alimentation,
(c) à l'étape D par application d'une alimentation supplémentaire vers la bande de fibres formée sur le tamis rotatif,
(d) entre les étapes E et F par application sur la bande de fibres dans un dispositif d'application ou
(e) entre les étapes G et H par application sur la bande de fibres dans un dispositif d'application et

dans lequel, dans la cellulose à haute teneur en matières fines, au moins 70 % des fibres, rapportés à la longueur cumulée des fibres, présentent une longueur inférieure à 0,2 mm et
dans lequel au moins 70 % et au maximum 95 % de la masse du séparateur sont constitués, après le séchage à l'étape G, de fibres fibrillées de cellulose régénérée et au moins 3 % et au maximum 30 % de la masse du séparateur sont constitués de cellulose à haute teneur en matières fines et dans lequel l'étape B est exécutée dans un broyeur colloïdal.

13. Procédé selon la revendication 12, dans lequel la fibrillation a lieu à l'étape B de sorte que les fibres de cellulose régénérée sont plus fibrillées et moins coupées et/ou dans lequel l'étape B est exécutée de sorte que le degré de mouture selon Schopper Riegler (°SR), mesuré selon ISO 5267-1:1999, est d'au moins 70 °SR et de maximum 100 °SR, de préférence d'au moins 80 °SR et de maximum 95 °SR et/ou dans lequel l'étape B est exécutée de sorte que, dans les fibres fibrillées de la cellulose régénérée, après l'étape B, au moins 30 % et au maximum 70 %, de préférence au moins 40 % et au maximum 65 % de la longueur de fibre cumulée sont constitués de fibres avec une longueur inférieure à 0,2 mm et/ou dans lequel au moins les étapes C à G sont exécutées sur une machine à papier.

14. Procédé selon l'une des revendications 12 ou 13, dans lequel la bande de fibres est calandrée entre les étapes G et H, dans lequel la bande de fibres est guidée à travers au moins un, de préférence à travers au moins 2 et au maximum 14 et, plus particulièrement de préférence, à travers au moins 5 et au maximum 14 fentes de laminage, dans lequel une pression mécanique est exercée sur la bande de fibres et dans lequel une charge linéaire, qui est exercée dans au moins une partie des fentes de laminage sur la bande de fibres, est de préférence d'au moins 20 kN/m et de maximum 600 kN/m, de préférence d'au moins 60 kN/m et de maximum 400 kN/m, dans lequel le calandrage est effectué de préférence entre les étapes (e) et H.

15. Procédé selon l'une des revendications 12 à 14, dans lequel l'application d'au moins une partie de la cellulose à haute teneur en matières fines est effectuée à l'étape (d) à l'aide d'une presse à film ou d'une coucheuse et/ou dans lequel l'application d'au moins une partie de la cellulose à haute teneur en matières fines est effectuée à l'étape (e) par impression ou pulvérisation, dans lequel l'application de la cellulose à haute teneur en matières fines est effectuée de préférence sur les deux côtés.

**Fig. 1a**

**Fig. 1b**

**Fig. 1c**

**Fig. 1d**

**Fig. 1e**

**Fig. 1f**

**Fig. 1g**

**Fig. 1h**

Fig. 1i

**Fig. 2a**

**Fig. 2b**

**Fig. 2c**

Fig. 3a

Fig. 3b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Standard Test Methods for Pore Size Characteristics of Membrane Filters by Bubble Point and Mean Flow Pore Test. *ASTM F316-03,* 2019